# EUROPEAN PATENT SPECIFICATION

(11) **EP 0 510 686 B1**
(45) Date of publication and mention of the grant of the patent: **09.07.1997**
(21) Application number: 92107052.0
(22) Date of filing: 24.04.1992
(51) Int. Cl.: G01N 35/02, G01N 33/48, G06K 7/10, G05B 15/00

(54) **Automatic analyzing apparatus capable of reading container data and method of handling reagents employed in the same**
Automatischer Analysenapparat, geeignet zum Lesen von Behälterdaten, und Verfahren zur Handhabung von darin verwendeten Reagenzien
Automate d'analyse lisant les données associées aux récipients et méthode de manipulation des réactifs dans cet automate

(30) Priority: 26.04.1991 JP 96721/91
(43) Date of publication of application: 28.10.1992
(73) Proprietor: HITACHI, LTD., Chiyoda-ku, Tokyo 101 (JP)
(72) Inventor: Takahashi, Katsuaki, Katsuta-shi (JP); Mitsumaki, Hiroshi, Mito-shi (JP); Yotsugi, Takehiko, Katsuta-shi (JP)
(74) Representative: Altenburg, Udo, Dipl.-Phys.

(56) References cited:
- EP-A- 0 192 968
- EP-A- 0 359 049
- GB-A- 2 131 168
- GB-A- 2 216 259
- JP-A-59 226 865
- US-A- 4 451 433
- CLINICAL CHEMISTRY vol. 34, no. 9, September 1988, WASHINGTON DC, US pages 1726 - 1732 M. FIORE ET AL. 'The Abbott IMx automated benchtop immunochemistry analyser system'
- PATENT ABSTRACTS OF JAPAN vol. 13, no. 469 (M-883)24 October 1989 & JP-A-1 184 184 ( VICTOR CO OF JAPAN LTD ) 21 July 1989
- PATENT ABSTRACTS OF JAPAN vol. 8, no. 141 (P-283)(1578) 30 June 1984 & JP-A-59 040 167 ( SHIMAZU SEISAKUSHU K.K. ) 5 March 1984
- PATENT ABSTRACTS OF JAPAN vol. 10, no. 264 (P-495)9 September 1986 & JP-A-61 088 234 ( CANON INC. ) 6 May 1986

## Description

### BACKGROUND OF THE INVENTION

### Industrial Field of the Invention:

The present invention relates to an automatic analyzing apparatus and a method of handling reagents employed in the automatic analyzing apparatus. More particularly, the present invention pertains to an automatic analyzing apparatus and a reagent handling method which are suitable for use when data on a liquid contained in a container, which is inscribed on the container, is read.

### Description of the Related Art:

In an automatic analyzing apparatus in which an organism sample, such as blood or urine, is mixed with reagents in a reaction container and in which the reaction liquid is measured to perform analysis about the inspection items of the sample, reagents are supplied to the reaction container from a reagent container by a reagent delivery device.

The method of adding reagents into the reaction containers correspondingly to the inspection items has been described in, for example, U.S. Patent Publication No. 4,451,433. In this method, the reagents are supplied from the reagent containers fixedly loaded in a reagent container housing unit by a pipetting mechanism. Japanese Patent Publication No. 59-22905 discloses the method in which a desired reagent container is located to a reagent picking position by rotating a turn table provided in the reagent container accommodating portion, and a reagent is pipetted from that reagent container by a pipette mechanism. Japanese Patent Unexamined Publication No. 61-68562 discloses the method of supplying a reagent from a reagent container fixedly provided in a reagent container accommodating portion by a disperser mechanism through a flow passage.

In an analyzing apparatus in which a large number of containers are handled, each of the containers has identification data, such as a bar code, and the data of each of the containers is read correspondingly to the position of that container. Such a technique has been described in, for example, Japanese Patent Unexamined Publication Nos. 62-95464, 61-68562 and 59-226865. Among these techniques, Japanese Patent Unexamined Publication No. 59-226865 implies the reading of the data on all of the reagent containers before reagents are delivered to reaction containers.

Among the aforementioned conventional techniques, only Japanese Patent Unexamined Publication No. 59-226865 has proposed the use of reagent containers with a bar code provided thereon. In an automatic analyzing apparatus to which the above-mentioned technique has been applied, when the operator holds the reagent containers in the container accommodation portion, he/she may forget to give the instruction to the data reading sensor. In that case, the reagent data input before the containers are replaced remains unchanged, and the operation of the analyzing apparatus will be troubled. Furthermore, when incorrect reagent containers are erroneously loaded in the container accommodating portion by the operator, the analyzing apparatus cannot respond to it.

A paper in Clinical Chemistry 34/9, page 1726 to 1732 (1988) discloses a reagent handling method for reading data inscribed on a reagent container loaded in a container housing unit by a reading device, where the reading operation starts when a door of the container housing has been closed.

EP 0 192 968 teaches that reagent identification information read from a barcode information on the reagent container is stored in a memory.

This state of the art, however, does not properly consider whether in case of multiple reagents used in different reagent rows, the reagents are placed in the correct row.

### SUMMARY OF THE INVENTION

It is an object of the present invention to provide an automatic analyzing apparatus which is capable of reliably grasping data on the liquid in a container loaded in a container housing unit.

It is another object of the present invention to provide an automatic analyzing apparatus and a reagent handling method which are capable of preventing troubles which would occur when the analysis operation proceeds with reagents inadequate to the reactions for objective inspection items loaded in a reagent accommodating portion.

It is another object of the present invention to provide an automatic analyzing apparatus and a reagent handling method which can inform the operator that the reagents inadequate to the reactions for the objective inspection items are loaded in a reagent accommodating portion.

To achieve the above objects, the present invention provides an automatic analyzing apparatus according to claim 1 and a reagent handling method according to claim 7.

The present invention further provides an automatic analyzing apparatus which is designed to prevent troubles of the analyzing apparatus which would occur when inadequate reagent containers are provided in a reagent accommodating portion. The types of reagents which are to be loaded in the reagent container accommodating portion are registered beforehand. When the reagent container whose data is read by the reading device does not correspond to the registered ones, the reagent delivery device is not activated.

Generally, the operator of the automatic analyzing apparatus loads reagent containers in the reagent container housing unit in a preparation stage before the analysis operation by the analyzing apparatus begins. After the operator has loaded necessary reagent containers or replaced the reagent containers with new ones, he/she closes the opening of the housing unit with a lid. Closing of the lid produces a detection signal which initiates the reading operation of the data reading device. Thus, the reading operation can be reliably started without troubling the operator after the reagent containers have been loaded.

In an automatic analyzing apparatus in which analysis is performed on multiple inspection items, many types of reagents are used, or two, three or four types of reagents may be used for one analysis item. Generally, the first and second reagents regarding the same analysis item are loaded separately, for example, on different rows, because they are added to the reaction container at different times. However, the operator may misplace the first reagent at the position of the second reagent and vice versa.

Misplacement of the first and second reagents can be checked by registering the types of reagents that can be loaded in the reagent accommodating portion beforehand, by reading the data on the reagent containers loaded in the accommodating portion and then by performing collation on these two data items. When inadequate reagents are loaded, at least the reagent delivery device is locked to prevent troubles. Furthermore, since the operation of the analyzing apparatus is not initiated, the operator can notice the abnormality before the continuous analysis operation begins. Preferably, inadequate reagents are displayed on a screen. Thus, the analyzing apparatus can recommend the operator replacement of the inadequate reagents with correct ones. After the inadequate reagents have been replaced, the reagent delivery device is unlocked, and the automatic analyzing apparatus initiates continuous analysis operation.

### BRIEF DESCRIPTION OF THE DRAWINGS

Fig. 1 is a cross-sectional view of a reagent container housing unit in an automatic analyzing apparatus shown in Fig. 2;
Fig. 2 is a schematic view of an embodiment of an automatic analyzing apparatus according to the present invention;
Fig. 3 is a schematic view of another embodiment of an automatic analyzing apparatus according to the present invention;
Fig. 4 is a cross-sectional view of a reagent container housing unit of the embodiment shown in Fig. 3.

### DESCRIPTION OF THE PREFERRED EMBODIMENTS

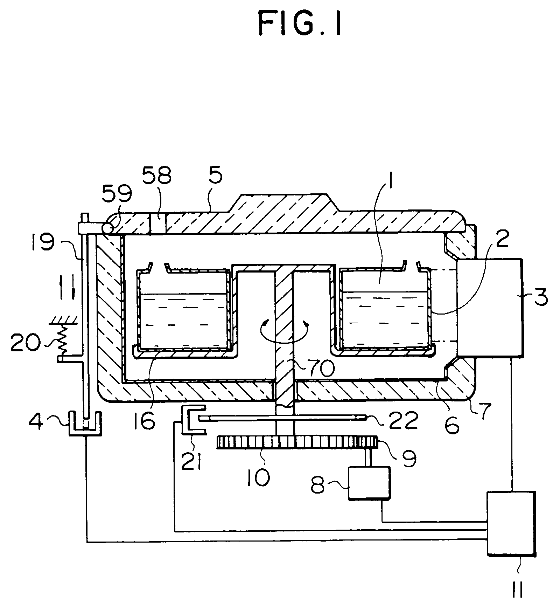

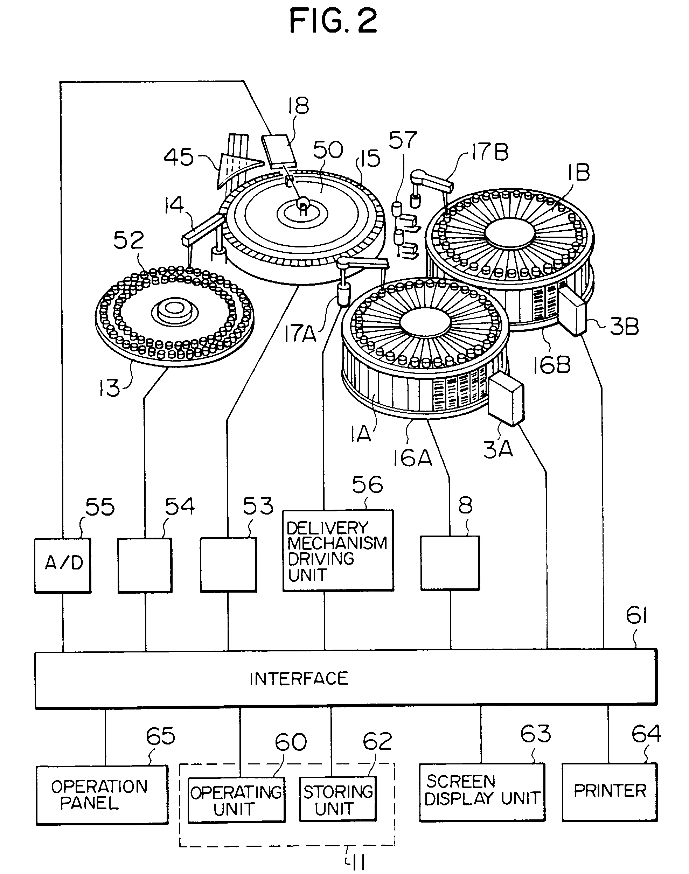

A first embodiment of the present invention will be described below with reference to Figs. 1 and 2. An automatic analyzing apparatus analyzes blood or urine specimens utilizing biochemical or immune reaction. Fig. 2 outlines the entire layout of an analyzing apparatus. Fig. 1 illustrates the structure of a reagent container housing unit.

In the analyzing apparatus shown in Fig. 2, a large number of reaction containers 15 are disposed on a reaction disk 50 which is intermittently driven by a driving unit 53 such that each of the reaction containers 15 crosses an optical path of a photometer 18. The reaction containers 15 are correspondent to the analysis items on which reaction should take place. The driving unit 52 is controlled by a control unit 11 through an interface 61.

Sample containers 52 are disposed on a sample disk 13 rotated by a driving unit 54 in such a manner that they can be stopped at a sample picking position one by one. The blood serum contained in each of the sample containers 52 is delivered by a sample pipetting mechanism 14 into the same number of reaction containers 15 as the number of required analysis items. First and second reagents are added to each of the reaction containers 15 from two reagent supply systems at predetermined times. Third and fourth reagents may be added in addition to the first and second reagents, depending on the analysis items.

The photometer 18 measures the liquid in the reaction container in which reaction between the sample and the reagents has completed. An analog signal obtained by photometry is converted into a digital signal by an analog/digital converter 55, and the converted signal is input to an operating unit 60 which operates the concentration or active value for each of the analysis items. The results of the operations are output by a printer 64. When necessary, they are displayed by a display unit 63, such as a CRT.

The analysis apparatus shown in Fig. 2 has at least two reagent supply systems. In the first reagent supply system, a large number of first reagent containers 1A are provided on a reagent disk 16A. A desired reagent is delivered to the corresponding reaction container 15 on the reaction disk at a desired time by a first reagent pipetting mechanism 17A. In the second reagent supply system, when a desired one in a large number of second reagent containers 1B provided on a reagent disk 16B is located at a reagent picking position, the reagent in that desired container is delivered to the corresponding reaction container 15 by a second reagent pipetting mechanism 17B.

Each of the reagent containers 1A and 1B has data on the liquid contained therein inscribed on the outer wall thereof. Examples of the data include the corresponding analysis item, the type of the reagent, the size of the reagent container, manufacturer's lot number and so on. Inscription may be made by digits, symbols or bar codes. In this embodiment, bar code notation is used. Although a bar code may be directly printed on the outer wall of each of the containers, a bar code label is generally pasted on a predetermined position of the container.

Each of the reagent disks 16A and 16B is rotated by a corresponding driving unit 8 such that a desired reagent container 1A or 1B is located at the reagent picking position. While the disk 16A or 16B is at a stop, a reagent delivery system picks a predetermined amount of reagent. The reagent delivery system has the reagent pipetting mechanisms 17A and 17B and corresponding delivery mechanism driving units 56 which are controlled by a control unit 11. Each of the reagent pipetting mechanisms 17A and 17B has a pipette probe having a liquid level sensor. After the picked reagent is discharged into the corresponding reaction container 15, each of the pipette probes is washed by a corresponding pipette washing unit. A stirring mechanism 57 stirs the liquid in the reaction container with the reagent added thereto.

A pipette probe with a liquid level sensor of the type which is disclosed in U.S. Patent No. 4,451,433 may be used. Fig. 2 illustrates the reagent supply system comprising a combination of the movable reagent containers and the pipetting mechanisms. However, a reagent delivery system comprising a combination of stationary reagent containers and a dispenser mechanism may also be adopted. In Fig. 2, the reaction container 15 on which photometry has been conducted is washed by a washing mechanism 45 before it is supplied for a new sample analysis.

Data reading devices 3A and 3B, each consisting of a bar code reader, are disposed near the reagent disks 16A and 16B shown in Fig. 2 in such a manner that they face the corresponding disks to read the data printed in the form of bar codes. The results of the reading are stored in a storing unit 62 of the control unit 11 correspondingly to the position of each of the reagent containers 1A and 1B on the reagent disks 16A and 16B.

Each of the reagent container accommodating portions includes a reagent container housing unit 7 made of a heat insulating material, and a lid 5 which closes an opening thereof, as shown in Fig. 1. In Fig. 2, illustration of such a reagent container accommodating portion is omitted to simplify the description.

In Fig. 1, the reagent containers 1A each with a bar code label 2 are placed on a movable retainer 16 disposed within the container housing unit 7. The container housing unit 7 has at its upper portion an opening through which the reagent containers are supplied to or discharged from the unit. The opening is normally closed by the lid 5 made of an insulating material. The lid 5 has a through-hole 58 at a position where it faces the reagent picking position. The pipette probe of the reagent pipetting mechanism 17A enters or leaves the container housing unit 7 through the through-hole 58.

The lid 5 is locked by a shaft 59 in such a manner as to be openable. Opening of the lid lowers a member 19. Thus, when the lid 5 is open, the distal end of the member 19 interrupts the optical path of a photo coupler 4 which is a detector. A resultant interrupt signal is transmitted to the control unit 11. The opened state of the lid 5 is maintained by a spring 20. When the lid 5 is closed, as shown in Fig. 1, the distal end of the member 19 retracts from the photo coupler 4, and the light from a light source in the photo coupler 4 thus reaches a receiving side. The resultant detection signal representing closing of the lid is also transmitted to the control unit 11.

The container housing unit 7 forms a cold reserving unit. This is achieved by disposing a cooling plate 6 on the inner wall thereof. A rotary shaft 70 of the movable retainer 16 has a disk-shaped gear 10 which is in mesh with a gear 9. Thus, a driving force of a stepping motor 8, which is a driving unit controlled by the control unit 11, is transmitted to the disk-shaped gear 10 through the gear 9. Also, a disk-shaped detecting plate 22 is provided on the rotary shaft 70. An angular position of the detecting plate 22 is detected by a position detector 21 which may be a photo coupler. The detection signal is transmitted to the control unit 11. A detecting plate 22 of the type which has detection holes in the disk, disclosed in Japanese Patent Publication No. 1-21910, may be employed. The position of the movable retainer 16 is determined on the basis of detection of the detection hole corresponding to each of the reagent containers. The bar code readers 3A and 3B are mounted on the side wall of the container housing units 7.

The operation of the analyzing apparatus shown in Fig. 2 will be described below.

After the sample containers 52 are placed on the sample disk 13, the operator inputs from the operation panel 64 inspection items designated for each of the samples, and thereby stores the analysis items correspondingly to the sample numbers in the storing unit 62 of the control unit 11. Consequently, the reagents required for each of the analysis items are selected from the reagent table in the storing unit 62, and are separated and registered in first and second reagent registration portions. The registered reagents are stored in the storing unit 62. The reagent registration status is displayed, if the corresponding reagent containers are not placed on the reagent disk 13, on a screen display unit 63 in red. At that time, the first reagents are displayed in a group corresponding to the first reagent disk 16A, while the second reagents are displayed in a group corresponding to the second reagent disk 16B. If the first reagents are erroneously placed on the second reagent disk 16B, an alarm is issued while such first reagents are displayed in red on the display screen.

Next, the operator opens the lid 5 of each of the first and second reagent container housing units 7 and places the reagent containers 1A and 1B required for measurements of the inspection items on the movable retainer 16 from the opening. When the required number of reagent containers have been placed, the operator closes the lid 5. Closing of the lid 5 allows the opening/closing detector 4 to output the detection signal to the control unit 11. On the basis of the detection signal, the control unit 11 gives the operation starting instruction to the bar code readers 3A and 3B and the corresponding driving units 8. Consequently, each of the movable retainers 16 is intermittently fed one container by one container, while the bar codes of the reagent containers 1A and 1B are read by the bar code readers 3A and 3B when they are temporarily stopped at the positions of the bar code readers 3A and 3B. The reading operation is performed on all of the reagent containers.

Each of the bar code readers 3A and 3B is of the CCD type which optically scans the code inscribed on the container in the vertical direction thereof. Each of the reagent containers stops at the reading portion for 0.5 seconds, during which time the bar code readers 3A and 3B scan the code 50 times.

When the code on all the containers in the container housing unit has been read, the bar code readers 3A and 3B are put in a waiting state. When there is no container at the container loaded site, no code can be read, and the control unit 11 thus determines that there is no container. The bar code data on the reagents is stored in the storing unit 62 correspondingly to the position data on the reagent containers on the movable retainer 16 which have been input from the position detector 21.

The reagent data read for each of the housing units 7 is collated with the previously registered reagent data. If there are reagents which cannot be made to correspond to each other, the type of such a reagent and the position of the reagent container are displayed. If there are first reagents in the second reagent housing unit and vice versa, the control unit 11 locks the reagent delivery system (17A, 17B and 56) and the sample pipetting mechanism 14 and thereby does not start the operation of the analyzing apparatus.

When the operator switches on the analyzing apparatus after the reagents have been placed, if there is no failure on the reagent supply systems, analyzing work begins. However, if there is a failure on the reagent supply systems, the analyzing apparatus is locked and cannot thus be activated. Thus, the operator notices the failure and can view the alarm data. At that time, the operator calls the reagent data display screen on the display unit 63 from the operation panel 65 and knows at which reagent disagreement is occurring. On the display screen, the type of all the reagents are tabulated in both systems and real names. The reagents on which agreement is obtained are displayed on the screen in blue. The types of reagents on which disagreement is occurring are displayed together with their positions in red.

Thus, the operator replaces the reagent containers within the container housing unit 7 on the basis of the data displayed on the screen. When the operator opens the lid 5 of the housing unit 7, the detector 4 outputs an off signal, and the data already read by the control unit 11 is reset. Even when the reading devices 3A and 3B are operating, opening of the lid 5 resets the reading operation. When the operator replaces the inadequate reagent containers and closes the lid 5, the detector 4 outputs the detection signal, and the reading devices 3A and 3B restart the reading operation of the data on all of the reagent containers. When the reading operation has been performed on all of the containers, the reading devices are put into a waiting state.

Thereafter, the operator calls the reagent data display screen on the screen display unit 63 and checks whether the inadequate reagents have been replaced. When the inadequate reagents have been replaced, all the reagents are displayed in blue on the screen, and the reagent delivery system and the sample pipetting mechanism are unlocked. Thereafter, the operator switches on the analyzing apparatus, which apparatus thereupon initiates the analyzing operation to perform continuous analysis on the samples.

In the analyzing apparatus shown in Fig. 2, a changeover switch is provided which can select one of two modes: the reagent container data reading mode or the reagent level detection mode. When the data reading mode is selected, the data reading operation is performed in the manner described above. In the reagent level detection mode, the remaining amount of a reagent is checked in the following manner.

In the reagent level detection mode, the pipette probes of the reagent pipetting mechanisms 17A and 17B are moved up and down. The pipette probe is washed each time it is used for liquid level detection. When the operator closes the lid 5 after he/she has placed the necessary reagent containers 1A and 1B, the control unit 11 is activated by the output signal of the opening/closing detector 4 to control the driving units 8 and the pipetting mechanisms 17A and 17B. While the movable retainer 16 is intermittently rotated within the housing unit 7, the position detector 21 checks the position of each of the containers. During the intermittent operation of the movable retainer 16, the pipette probe falls through the through-hole 58 toward the reagent container and then touches the level of the reagent in the container 1.

Since the pipette probe has a reagent level detecting unit, when it touches the liquid surface, it stops falling, and outputs an on signal. The remaining amount of reagent contained in the relevant container is calculated using the liquid height data from the bottom of the reagent container 1 and the size of the container, and how many more samples can be inspected with the remaining amount is calculated. After liquid level detection has been conducted on a certain container, the pipette probe is raised and then the liquid level in a container moved under the through-hole 58 by a subsequent step feed is detected.

When liquid level detection has been made on all the reagent containers, the analyzing apparatus is put in a waiting mode. The results of liquid level detection can be displayed on the screen display unit 63. The instruction of the display is given from the operation panel 65. It may be programmed such that liquid level detection is performed immediately after data reading.

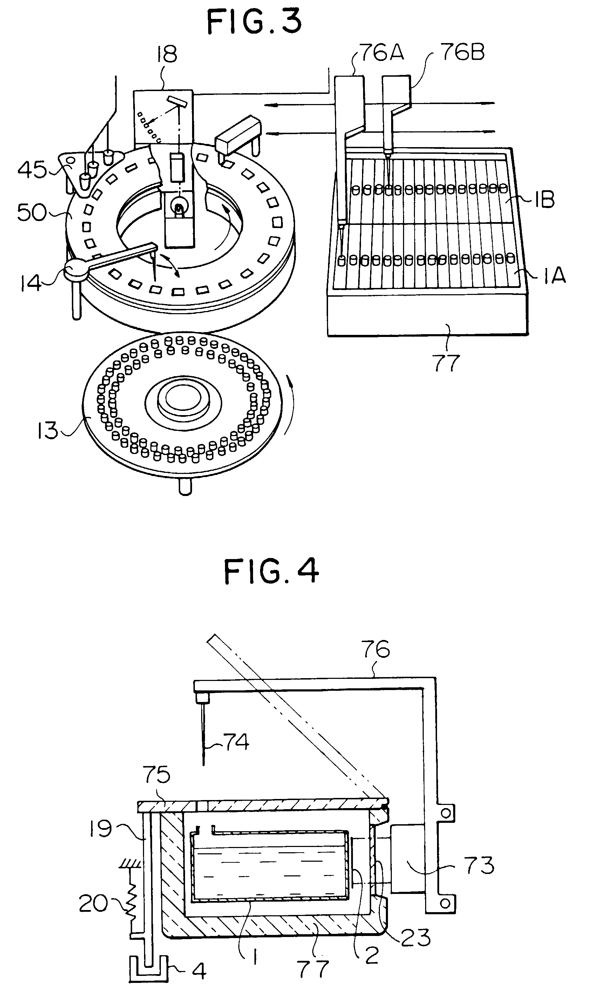

Another embodiment of the present invention will be described below with reference to Figs. 3 and 4. In these figures, the same reference characters are used to denote parts which have the same functions as those of the first embodiment. Fig. 3 schematically illustrates an analyzing apparatus. Fig. 4 illustrates a reagent container housing unit of the analyzing apparatus.

In the analyzing apparatus shown in Figs. 3 and 4, a reagent container housing unit 77 disposed in the reagent container accommodating portion is made fixed such that it does not move the first reagent containers 1A and the second reagent containers 1B. Reagent pipetting mechanisms 76A and 76B for the corresponding reagent systems can be stopped in such a manner that they can face each of the containers and can be moved over the reagent container rows. The reagent selectively picked from the containers 1A and 1B is delivered to the reaction container on the reaction disk 50 by a pipette probe 74. The housing unit 77 has a light transmission window 23. A bar code reader 73 reads through the window 23 the data on the reagent which is printed on a bar code label 2 adhered to each of the reagent containers 1.

The bar code reader 73 is mounted on a movable member of the reagent pipetting mechanism 76. To read the bar code, the movable member is moved in the lateral direction, i.e., along the row of the containers, so that the bar codes on all the reagent containers can be read. A lid 75 is provided on the housing unit 77 in such a manner that it can be opened and closed. When the reagent containers are placed in or removed from the housing unit 77, the lid 75 is opened. After the reagent containers have been placed, the lid 75 is closed. When closing of the lid 75 is detected by the opening/closing detector 4, the reading operation of the bar code reader 73 begins.

As will be understood from the foregoing description, in the present invention, the operator can reliably grasp the data on the liquid contained in each of the containers by closing the lid of the container housing unit after he/she has placed the containers therein. As a result, newest data can be obtained without errors even when the containers in the container housing unit are replaced.

Furthermore, since the analyzing apparatus automatically makes collation, a trouble caused by inadequate reagent placed on the incorrect reagent position can be prevented.

## Claims

1. An automatic analyzing apparatus including at least one container housing unit (7) having an opening through which reagent containers (1) for a plurality of analysis items can be placed on a retainer (16), data on the respective reagent contained in each of the containers being inscribed thereon, a reading device (3) for reading the data of the containers loaded in one retainer (16), a lid (5) for covering the opening, an opening/closing detector (4) for outputting a signal when the lid is closed, a control unit (11) for starting the consecutive data reading operation by said reading device (3) on the basis of the said signal, on all of the reagent containers,
**characterized by**
means to register the reagent types required for the analysis of a plurality of samples and analysis items in a storing unit (62) separately in first and second reagent registration portions corresponding to different reagent rows to be loaded, means to collate the reagent data read for each of the housing units (7) with the previously registered reagent data,
said control unit (11) checking whether or not all the reagent containers are placed in the correct row and preventing the start of the analysis operation if the read reagent data do not correspond with the registered required reagent data and indicating the disagreement, and admitting the start of the analysis operation if agreement is obtained.

2. An automatic analyzing apparatus according to claim 1, wherein a row of containers (1) placed in said container housing unit (7) and said reading device (3) are arranged to be movable relative to each other for reading the data inscribed on the containers in sequence.

3. An automatic analyzing apparatus according to claim 1, wherein said container housing unit has container conveying means for moving the row of container intermittently during the data reading operation.

4. An automatic analyzing apparatus according to claim 1, further comprising a liquid delivery device having a pipette probe having a liquid level sensor, said liquid delivery device detecting, before the analyzing operation, the level of the liquid in the container while said lid is being closed.

5. An automatic analyzing apparatus according to claim 1, wherein the row of containers (1) is placed in said container housing unit (7) and said pipette probe are arranged to be movable relative to each other during the liquid level detection.

6. An automatic analyzing apparatus according to claim 1, further comprising selection means for selection one of a data reading mode performed by said reading device and a liquid level detection mode performed by said liquid delivery device.

7. A reagent handling method for reading, by a reading device (3), data inscribed on reagent containers (1) loaded through an opening in a container housing unit (7) onto a retainer (16), and closing a lid (5) covering the container housing unit (7) and thereby generating a signal for a control unit (11) starting the consecutive reading of the data on the reagent containers in the container housing (7),
**characterized by** the steps of
- registering the reagent types required for the analysis of a plurality of samples and analysis items in a storing unit (62) separately in first and second reagent registration portions corresponding to different reagent rows to be loaded,
- collating the registered reagent data with the read reagent data, whereby the control unit (11) checks whether or not all the reagent containers are placed in the correct row and prevents the start of the analysis operation, if the read reagent data do not correspond with the registered required reagent data
- and admits the start of the analysis operation if agreement is obtained.

8. A reagent handling method according to claim 7, wherein, before the analysis operation, while said lid is being closed, a liquid delivery device having a liquid level sensor is activated to detect a level of the liquid in the reagent container.

9. A reagent handling method according to claim 7, wherein opening of said lid erases the data which has been already read.

10. A reagent handling method according to claim 7, wherein when the data on the plurality of reagent containers are read by said reading device and any of the reagents which have been read does not correspond to types of reagents which have been registered beforehand, the disagreeing reagent is displayed on a display device.

11. A reagent handling method according to claim 10, wherein said display device is a screen display device which can perform display in a plurality of colors, the reagents which correspond to the registered data being displayed on the screen in a color different from that in which the reagents which do not correspond to the registered data are displayed on the screen.

## Patentansprüche

1. Automatisches Analysegerät mit wenigstens einer Behälteraufnahmeeinheit (7) mit einer Öffnung, durch die Reagenzbehälter (1) für eine Vielzahl von Analysesubstanzen auf einen Halter (16) aufgesetzt werden können, wobei Daten über das Reagens, das in jedem der Behälter enthalten ist, auf diesen eingeschrieben sind, eine Leseeinrichtung (3) zum Lesen der Daten der auf einem Halter (16) aufgesetzten Behälter, einem Deckel (5) zum Abdecken der Öffnung, einem Öffnungs-/Schließdetektor (4) zum Ausgeben eines Signals, wenn der Deckel geschlossen ist, und einer Steuereinheit (11) zum Starten des aufeinanderfolgenden Datenlesevorgangs durch die Leseeinrichtung (3) auf allen Reagenzbehältern auf der Basis dieses Signals,
**gekennzeichnet durch**
eine Vorrichtung zum Registrieren der für die Analyse einer Vielzahl von Proben und Analysiersubstanzen erforderlichen Reagenztypen in einer Speichereinheit (62) getrennt in erste und zweite Registrationsabschnitte, die verschiedenen zu ladenden Reagenzreihen entsprechen, eine Vorrichtung zum Kollationieren der für jede der Aufnahmeeinheiten (7) gelesenen Daten mit den vorher registrierten Reagenzdaten,
wobei die Steuereinheit (11) prüft, ob alle Reagenzbehälter in der richtigen Reihe aufgesetzt sind oder nicht, und den Beginn des Analysevorgangs verhindert, wenn die gelesenen Reagenzdaten nicht mit den registrierten erforderlichen Reagenzdaten übereinstimmen, und die Diskrepanz anzeigt, und den Beginn des Analysevorgangs zuläßt, wenn Übereinstimmung erzielt ist.

2. Automatisches Analysegerät nach Anspruch 1, wobei eine Reihe von in der Behälteraufnahmeeinheit (7) aufgesetzten Behältern (1) und die Leseeinrichtung (3) gegeneinander beweglich angeordnet sind, um die auf den Behältern eingeschriebenen Daten aufeinanderfolgend zu lesen.

3. Automatisches Analysegerät nach Anspruch 1, wobei die Behälteraufnahmeeinheit eine Behältertransportvorrichtung aufweist, um die Reihe der Behälter intermittierend während des Datenlesevorgangs zu bewegen.

4. Automatisches Analysegerät nach Anspruch 1, außerdem enthaltend eine Flüssigkeitszufuhreinrichtung mit einer Pipettensonde mit einem Flüssigkeitspegelsensor, wobei die Flüssigkeitszufuhreinrichtung vor dem Analysevorgang den Pegel der Flüssigkeit in dem Behälter detektiert, während der Deckel geschlossen wird.

5. Automatisches Analysegerät nach Anspruch 1, wobei die Reihe der Behälter (1) in der Behälteraufnahmeeinheit (7) und die Pipettiersonde so angeordnet sind, daß sie relativ zueinander während der Flüssigkeitspegeldetektion beweglich sind.

6. Automatisches Analysegerät nach Anspruch 1, weiter enthaltend eine Auswahlvorrichtung zur Auswahl von einem Datenlesemodus, der von der Leseeinrichtung durchgeführt wird, und einem Flüssigkeitspegeldetektionsmodus, der von der Flüssigkeitszufuhreinrichtung durchgeführt wird.

7. Reagenzhandhabungsverfahren zum Lesen, mittels einer Leseeinrichtung (3), von auf Reagenzbehältern (1) eingeschriebenen Daten, wobei die Behälter durch eine Öffnung in einer Behälteraufnahmeeinheit (7) auf einen Halter (16) gesetzt werden, und Schließen eines Deckels (5), der die Behälteraufnahmeeinheit (7) abdeckt, und damit eines Signals für eine Steuereinheit (11) zu erzeugen, welche das aufeinanderfolgende Lesen der Daten auf den Reagenzbehältern in der Behälteraufnahme (7) startet,
g**ekennzeichnet durch** die Schritte
- Registrieren der für die Analyse einer Vielzahl von Proben und Analysesubstanzen erforderlichen Reagenztypen in einer Speichereinheit (62) getrennt in erste und zweite Registrationsabschnitte, die verschiedenen zu ladenden Reagenzreihen entsprechen,
- Kollationieren der registrierten Reagenzdaten mit den gelesenen Reagenzdaten, wodurch die Steuereinheit (11) prüft, ob alle Reagenzbehälter in der richtigen Reihe aufgesetzt sind oder nicht, und den Beginn des Analysevorgangs verhindert, falls die gelesenen Reagenzdaten nicht mit den registrierten erforderlichen Reagenzdaten übereinstimmen,
- und den Beginn des Analysevorgangs zuläßt, falls Übereinstimmung erzielt ist.

8. Verfahren nach Anspruch 7, wobei vor dem Analysevorgang, während der Deckel geschlossen wird, eine Flüssigkeitszufuhreinrichtung mit einem Flüssigkeitspegelsensor aktiviert wird, um den Pegel der Flüssigkeit in dem Reagenzbehälter zu detektieren.

9. Verfahren nach Anspruch 7, wobei das Öffnen des Deckels die Daten löscht, die bereits gelesen worden sind.

10. Verfahren nach Anspruch 7, wobei, wenn die Daten auf der Vielzahl der Reagenzbehälter durch die Leseeinrichtung gelesen werden und irgendeine der gelesenen Reagenzien nicht den Reagenztypen entspricht, die vorher registriert worden sind, das nicht übereinstimmende Reagens in einem Anzeigegerät dargestellt wird.

11. Verfahren nach Anspruch 10, wobei das Anzeigegerät ein Bildschirmgerät ist, das eine Darstellung in mehreren Farben ermöglicht, wobei die Reagenzien, die den registrierten Daten entsprechen, auf dem Bildschirm in einer Farbe dargestellt werden, die verschieden von derjenigen ist, mit der die Reagenzien auf dem Bildschirm dargestellt werden, die nicht den registrierten Daten entsprechen.

## Revendications

1. Appareil d'analyse automatique comprenant au moins une unité (7) renfermant des récipients, comportant une ouverture à travers laquelle des récipients de réactif (1) pour une pluralité d'éléments d'analyse peuvent être disposés sur un dispositif de retenue (16), les données concernant l'agent respectif contenu dans chacun des récipients étant inscrites sur celui-ci, un dispositif de lecture (3) pour lire les données des récipients chargés dans un dispositif de retenue (16), un couvercle (5) pour recouvrir l'ouverture, un détecteur d'ouverture/fermeture (4) pour délivrer en sortie un signal lorsque le couvercle est fermé, une unité de commande (11) pour démarrer l'opération de lecture de données consécutive dudit dispositif de lecture (3) en fonction dudit signal, pour tous les récipients de réactif, caractérisé par :
des moyens pour enregistrer les types de réactif requis pour l'analyse d'une pluralité d'échantillons et d'éléments d'analyse dans une unité de mémorisation (62) séparément dans des première et deuxième parties d'enregistrement de réactifs correspondant à des rangées de réactifs à charger différentes, des moyens pour collationner les données de réactifs lues pour chacune des unités (7) renfermant des récipients avec les données de réactifs précédemment enregistrées,
ladite unité de commande (11) vérifiant si oui ou non tous les récipients de réactif sont disposés dans la rangée correcte et empêchant le démarrage de l'opération d'analyse si les données de réactifs lues ne correspondent pas aux données de réactifs requises enregistrées et indiquant le désaccord, et admettant le démarrage de l'opération d'analyse si l'accord est obtenu.

2. Appareil d'analyse automatique selon la revendication 1, dans lequel une rangée de récipients (1) disposée dans ladite unité (7) renfermant des récipients et ledit dispositif de lecture (3) sont conçus pour pouvoir être mobiles l'une par rapport à l'autre pour lire les données inscrites sur les récipients en séquence.

3. Appareil d'analyse automatique selon la revendication 1, dans lequel ladite unité renfermant des récipients comporte des moyens de convoyage de récipients pour déplacer la rangée de récipients par intermittence durant l'opération de lecture de données.

4. Appareil d'analyse automatique selon la revendication 1, comprenant de plus un dispositif de délivrance de liquides comprenant une sonde à pipette ayant un détecteur de niveau de liquide, ledit dispositif de délivrance de liquides détectant, avant l'opération d'analyse, le niveau du liquide dans le récipient tandis que ledit couvercle est fermé.

5. Appareil d'analyse automatique selon la revendication 1, dans lequel la rangée de récipients (1) disposée dans ladite unité (7) renfermant des récipients et ladite sonde à pipette sont conçues pour être mobiles l'une par rapport à l'autre durant la détection de niveau de liquide.

6. Appareil d'analyse automatique selon la revendication 1, comprenant de plus des moyens de sélection pour sélectionner l'un parmi un mode de lecture de données exécuté par ledit dispositif de lecture et un mode de détection de niveau de liquide exécuté par ledit dispositif de délivrance de liquides.

7. Procédé de manipulation de réactifs pour lire, à l'aide d'un dispositif de lecture (3), des données inscrites sur des récipients de réactif (1) chargés, à travers une ouverture dans une unité (7) renfermant des récipients, sur un dispositif de retenue (16) et pour fermer un couvercle (5) recouvrant l'unité (7) renfermant des récipients, et générer par conséquent un signal pour une unité de commande (11) démarrant la lecture consécutive des données sur les récipients de réactif dans l'unité (7) renfermant des récipients, caractérisé par les étapes suivantes :
- l'enregistrement des types de réactifs requis pour l'analyse d'une pluralité d'échantillons et d'éléments d'analyse dans une unité de mémorisation (62), séparément dans des première et deuxième parties d'enregistrement de réactifs correspondant à des rangées de réactifs à charger différentes,
- le collationnement des données de réactifs enregistrées avec les données de réactifs lues, grâce à quoi l'unité de commande (11) vérifie si oui ou non tous les récipients de réactif sont disposés dans la rangée correcte et empêche le démarrage de l'opération d'analyse si les données de réactifs lues ne correspondent pas aux données de réactifs requises enregistrées,
- et l'admission du démarrage de l'opération d'analyse si l'accord est obtenu.

8. Procédé de manipulation de réactifs selon la revendication 7, dans lequel, avant l'opération d'analyse, tandis que ledit couvercle est fermé, un dispositif de délivrance de liquides comportant un détecteur de niveau de liquide est activé pour détecter un niveau du liquide dans le récipient de réactif.

9. Procédé de manipulation de réactifs selon la revendication 7, dans lequel l'ouverture dudit couvercle efface les données qui ont déjà été lues.

10. Procédé de manipulation de réactifs selon la revendication 7, dans lequel les données sur la pluralité de récipients de réactif sont lues par ledit dispositif de lecture, et, pour l'un quelconque des réactifs qui ont été lus et qui ne correspond pas aux types de réactifs qui ont été enregistrés au préalable, le réactif en désaccord est visualisé sur un dispositif de visualisation.

11. Procédé de manipulation de réactifs selon la revendication 10, dans lequel ledit dispositif de visualisation est un dispositif de visualisation à écran qui peut réaliser une visualisation en une pluralité de couleurs, les réactifs qui correspondent aux données enregistrées étant visualisés sur l'écran dans une couleur différente de celle dans laquelle les réactifs qui ne correspondent pas aux données enregistrées sont visualisés sur l'écran.
